# EUROPÄISCHE PATENTSCHRIFT

(11) **EP 3 031 818 B1**
(45) Veröffentlichungstag und Bekanntmachung des Hinweises auf die Patenterteilung: **03.07.2019**
(21) Anmeldenummer: 15192748.0
(22) Anmeldetag: 04.12.2014
(51) Int. Cl.: C07F 9/6574

(54) **EINTOPFSYNTHESE ZUR HERSTELLUNG VON DIPHOSPHITEN UND TRIPHOSPHITEN**
ONE POT SYNTHESIS FOR THE PREPARATION OF DIPHOSPHITES AND TRIPHOSPHITES
SYNTHESE EN UN SEUL RECIPIENT DESTINEE A LA FABRICATION DE DIPHOSPHITES ET DE TRIPHOSPHITES

(43) Veröffentlichungstag der Anmeldung: 15.06.2016
(62) Teilanmeldung aus: 14196183.9
(73) Patentinhaber: Evonik Degussa GmbH, 45128 Essen (DE)
(72) Erfinder: DYBALLA, Katrin Marie, 45657 Recklinghausen (DE); FRANKE, Robert, 45772 Marl (DE); BÖRNER, Armin, 18059 Rostock (DE); SELENT, Detlef, 18059 Rostock (DE)
(74) Vertreter: Evonik Patent Association

(56) Entgegenhaltungen:
- WO-A1-99/06358
- WO-A1-2010/042313
- ZHU, SHANBIN ET AL: "Direct synthesis of 2,2'-bis(dibenzo[d,f][1,3,2]dioxaphosphepi n-6-yloxy) biphenyl", SHIYOU HUAGONG, Bd. 40, Nr. 5, 2011, Seiten 545-549, XP008176456, ISSN: 1000-8144 & DATABASE CA [Online] CHEMICAL ABSTRACTS SERVICE, COLUMBUS, OHIO, US; 2011, ZHU, SHANBIN ET AL: "Direct synthesis of 2,2'-bis(dibenzo[d,f][1,3,2]dioxaphosphepi n-6-yloxy) biphenyl", XP002740078, gefunden im STN Database accession no. 2011:742101
- BAKER M J ET AL: "CHELATING DISHOSPHPHITE COMPLEXES OF NICKEL(O) AND PLATINUM(O): THEIR REMARKABLE STABILIT AND HYDDROCYANATION ACTIVITY", JOURNAL OF THE CHEMICAL SOCIETY, CHEMICAL COMMUNICATIONS, CHEMICAL SOCIETY. LETCHWORTH, GB, 1991, Seite 803/804, XP002002591, ISSN: 0022-4936, DOI: 10.1039/C39910000803

## Beschreibung

Die Erfindung betrifft eine Eintopfsynthese zur Herstellung von Diphosphiten und Triphosphiten.

Die Synthese von phosphorhaltigen Liganden ist in der Literatur mehrfach beschrieben. Einen guten Überblick findet man in "Phosphorous(III) Ligands in Homogeneous Catalysis - Design and Synthesis" von Paul C.J. Kamer und Piet W.N.M. van Leeuwen; John Wiley and Sons, 2012 sowie darin enthaltene Literaturhinweise.

In WO 99/06358 A1 wird ein Verfahren zur Hydrocyanierung beschrieben. Hierbei kommt ein Nickel-Katalysator zum Einsatz, welcher multidentate Phosphitliganden aufweist.

In ZHU, SHANBIN ET AL, "Direct synthesis of 2,2'-bis(dibenzo[d,f][1,3,2]dioxaphosphepin-6-yloxy) biphenyl", SHIYOU HUAGONG, (2011), Bd. 40, Nr. 5, Seiten 545 - 549, wird die direkte Synthese von 2,2'-Bis(dibenzo[d,f][1,3,2]dioxaphosphepin-6-yloxy)biphenyl beschrieben. Hierbei kommen PCl₃ und Et₃N zum Einsatz.

In WO 2010/042313 A1 wird ein Verfahren zur Herstellung von Bisphosphiten beschrieben. Hierbei kommen PCl₃ und eine Stickstoffbase zum Einsatz.

In BAKER M J ET AL, "CHELATING DISHOSPHPHITE COMPLEXES OF NICKEL(O) AND PLATINUM(O): THEIR REMARKABLE STABILIT AND HYDDROCYANATION ACTIVITY", JOURNAL OF THE CHEMICAL SOCIETY, CHEMICAL COMMUNICATIONS, CHEMICAL SOCIETY. LETCHWORTH, GB, (1991), Seiten 803/804, wird die Synthese eines Nickel-Komplexes beschrieben. Dieser kann als Katalysator in der Hydrocyanierung eingesetzt werden.

In der Regel erfolgt die Synthese der Liganden über mehrere Zwischenstufen, die zwischen den einzelnen Stufen isoliert werden. Es ist daher wünschenswert, ein Verfahren zu entwickeln, dass auf die Isolierung dieser Zwischenstufen verzichten kann und dennoch Liganden in guter Ausbeute generiert.

Der Erfindung lag die Aufgabe zugrunde ein Verfahren zur Herstellung von Diphosphiten und Triphosphiten zu entwickeln, welches mit möglichst wenigen Verfahrensschritten zu den gewünschten Zielprodukten führt.

Die Aufgabe wird gelöst durch ein Verfahren nach Anspruch 1.

-(C₁-C₁₂)-Alkyl und -O-(C₁-C₁₂)-Alkyl können jeweils unsubstituiert oder durch einen oder mehrere gleiche oder verschiedene Reste substituiert sein, die ausgewählt sind unter -(C₃-C₁₂)-Cycloalkyl, -(C₃-C₁₂)-Heterocycloalkyl, -(C₆-C₂₀)-Aryl, Fluor, Chlor, Cyano, Formyl, Acyl oder Alkoxycarbonyl.

-(C₆-C₂₀)-Aryl und -(C₆-C₂₀)-Aryl-(C₆-C₂₀)-Aryl- können jeweils unsubstituiert oder durch einen oder mehrere gleiche oder verschiedene Reste substituiert sein, die ausgewählt sind unter -H, -(C₁-C₁₂)-Alkyl, -O-(C₁-C₁₂)-Alkyl, -O-(C₆-C₂₀)-Aryl, -(C₆-C₂₀)-Aryl, -Halogen (wie Cl, F, Br, I),-COO-(C₁-C₁₂)-Alkyl, -CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl, -COOH, -OH, -SO₃H; -SO₃Na, -NO₂, -CN, -N[(C₁-C₁₂)-Alkyl]₂.

Im Rahmen der Erfindung umfasst der Ausdruck -(C₁-C₁₂)-Alkyl geradkettige und verzweigte Alkylgruppen. Vorzugsweise handelt es sich dabei um unsubstituierte geradkettige oder verzweigte -(C₁-C₈)-Alkyl- und ganz bevorzugt -(C₁-C₆)-Alkylgruppen. Beispiele für -(C₁-C₁₂)-Alkylgruppen sind insbesondere Methyl, Ethyl, Propyl, Isopropyl, n-Butyl, iso-Butyl, sec.-Butyl, tert.-Butyl, n-Pentyl, 2-Pentyl, 2-Methylbutyl-, 3-Methylbutyl-, 1,2-Dimethylpropyl-, 1,1-Dimethylpropyl, 2,2-Dimethylpropyl-, 1-Ethylpropyl-, n-Hexyl-, 2-Hexyl-, 2-Methylpentyl-, 3-Methylpentyl-, 4-Methylpentyl-, 1,1-Dimethylbutyl-, 1,2-Diemthylbutyl-, 2,2-Dimethylbutyl-, 1,3-Dimethylbutyl-, 2,3-Dimethylbutyl-, 3,3-Dimethylbutyl-, 1,1,2-Trimethylpropyl-, 1,2,2-Trimethylpropyl-, 1-Ethylbutyl-, 1-Ethyl-2-methylpropyl-, n-Heptyl-, 2-Heptyl-, 3-Heptyl-, 2-Ethylpentyl-, 1-Propylbutyl-, n-Octyl-, 2-Ethylhexyl-, 2-Propylheptyl-, Nonyl-, Decyl.

Die Erläuterungen zum Ausdruck -(C₁-C₁₂)-Alkyl gelten auch für die Alkylgruppen in -O-(C₁-C₁₂)-Alkyl, also in -(C₁-C₁₂)-Alkoxy. Vorzugsweise handelt es sich dabei um unsubstituierte geradkettige oder verzweigte -(C₁-C₆)-Alkoxygruppen.

Substituierte -(C₁-C₁₂)-Alkylgruppen und substituierte -(C₁-C₁₂)-Alkoxygruppen können in Abhängigkeit von ihrer Kettenlänge, einen oder mehrere Substituenten aufweisen. Die Substituenten sind vorzugsweise unabhängig voneinander ausgewählt unter -(C₃-C₁₂)-Cycloalkyl, -(C₃-C₁₂)-Heterocycloalkyl, -(C₆-C₂₀)-Aryl, Fluor, Chlor, Cyano, Formyl, Acyl oder Alkoxycarbonyl.

Der Ausdruck -(C₃-C₁₂)-Cycloalkyl umfasst im Sinne der vorliegenden Erfindung mono-, bi- oder tricyclische Kohlenwasserstoffreste mit 3 bis 12, insbesondere 5 bis 12 Kohlenstoffatomen. Dazu zählen Cyclopropyl-, Cyclobutyl-, Cyclopentyl-, Cyclohexyl-, Cycloheptyl-, Cyclooctyl-, Cyclododecyl-, Cyclopentadecyl-, Norbonyl- oder Adamantyl.
Ein Beispiel für ein substituiertes Cycloalkyl wäre Menthyl.

Der Ausdruck -(C₃-C₁₂)-Heterocycloalkylgruppen umfasst im Sinne der vorliegenden Erfindung nichtaromatische, gesättigte oder teilweise ungesättigte cycloaliphatische Gruppen mit 3 bis 12, insbesondere 5 bis 12, Kohlenstoffatomen. Die -(C₃-C₁₂)-Heterocycloalkylgruppen weisen vorzugsweise 3 bis 8, besonders bevorzugt 5 oder 6, Ringatome auf. In den Heterocycloalkylgruppen sind im Unterschied zu den Cycloalkylgruppen 1, 2, 3 oder 4 der Ringkohlenstoffatome durch Heteroatome oder heteroatomhaltige Gruppen ersetzt. Die Heteroatome oder die heteroatomhaltige Gruppen sind vorzugsweise ausgewählt unter -O-, -S-, -N-, -N(=O)-, -C(=O)- oder -S(=O)-. Beispiele für -(C₃-C₁₂)-Heterocycloalkylgruppen Tetrahydrothiophenyl, Tetrhydrofuryl, Tetrahydropyranyl und Dioxanyl.

Der Ausdruck -(C₆-C₂₀)-Aryl und -(C₆-C₂₀)-Aryl-(C₆-C₂₀)-Aryl- umfasst im Sinne der vorliegenden Erfindung mono- oder polycyclische aromatische Kohlenwasserstoffreste. Diese weisen 6 bis 20 Ringatome, besonders bevorzugt 6 bis 14 Ringatome, insbesondere 6 bis 10 Ringatome, auf. Aryl steht vorzugsweise für -(C₆-C₁₀)-Aryl und -(C₆-C₁₀)-Aryl-(C₆-C₁₀)-Aryl-. Aryl steht insbesondere für Phenyl, Naphthyl, Indenyl, Fluorenyl, Anthracenyl, Phenanthrenyl, Naphthacenyl, Chrysenyl, Pyrenyl, Coronenyl. Insbesondere steht Aryl für Phenyl, Naphthyl und Antracenyl.

Substituierte -(C₆-C₂₀)-Arylgruppen und -(C₆-C₂₀)-Aryl-(C₆-C₂₀)-Arylgruppen können, in Abhängigkeit von der Ringgröße, einen oder mehrere (z.B. 1, 2, 3, 4 oder 5) Substituenten aufweisen. Diese Substituenten sind vorzugsweise unabhängig voneinander ausgewählt unter-H, -(C₁-C₁₂)-Alkyl, -O-(C₁-C₁₂)-Alkyl, -O-(C₆-C₂₀)-Aryl, -(C₆-C₂₀)-Aryl, -Halogen (wie Cl, F, Br, I),-COO-(C₁-C₁₂)-Alkyl, -CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl, -COOH, -OH, -SO₃H; -SO₃Na, -NO₂, -CN, -N[(C₁-C₁₂)-Alkyl]₂.

Substituierte -(C₆-C₂₀)-Arylgruppen und -(C₆-C₂₀)-Aryl-(C₆-C₂₀)-Arylgruppen sind vorzugsweise substituierte -(C₆-C₁₀)-Arylgruppen und -(C₆-C₁₀)-Aryl-(C₆-C₁₀)-Arylgruppen, insbesondere substituiertes Phenyl oder substituiertes Naphthyl oder substituiertes Anthracenyl. Substituierte-(C₆-C₂₀)-Arylgruppen tragen vorzugsweise eine oder mehrere z.B. 1, 2, 3, 4 oder 5 Substituenten, ausgewählt unter -(C₁-C₁₂)-Alkylgruppen, -(C₁-C₁₂)-Alkoxygruppen.

Der Ausdruck Halogene umfasst Cl, F, Br, I, vorzugsweise Cl, Br, I.

Verfahren umfassend den Verfahrensschritt:
b) 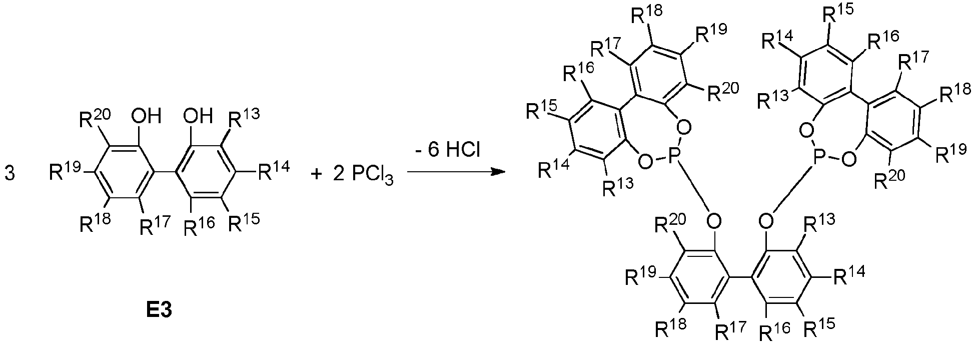 wobei die bei der Umsetzung anfallende Zwischenstufe (**Z3**) nicht isoliert wird: 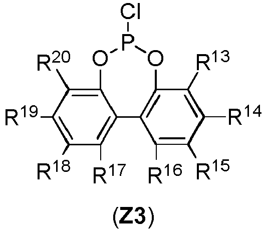 wobei
R¹³, R¹⁴, R¹⁵, R¹⁶, R¹⁷, R¹⁸, R¹⁹, R²⁰ ausgewählt sind aus:
-H, -(C₁-C₁₂)-Alkyl, -O-(C₁-C₁₂)-Alkyl, -O-(C₆-C₂₀)-Aryl, -(C₆-C₂₀)-Aryl, -S-Alkyl, -S-Aryl, Halogen, -COO-(C₁-C₁₂)-Alkyl, -CONH-(C₁-C₁₂)-Alkyl, -CO-(C₁-C₁₂)-Alkyl, -CO-(C₆-C₂₀)-Aryl, -COOH, -OH, -SO₃H, -CN, -N[(C₁-C₁₂)-Alkyl]₂;
wobei die genannten Alkyl- und Arylgruppen wie folgt substituiert sein können: substituierte -(C₁-C₁₂)-Alkylgruppen und substituierte -(C₁-C₁₂)-Alkoxygruppen können in Abhängigkeit von ihrer Kettenlänge, einen oder mehrere Substituenten aufweisen; die Substituenten sind unabhängig voneinander ausgewählt unter -(C₃-C₁₂)-Cycloalkyl, -(C₃-C₁₂)-Heterocycloalkyl, -(C₆-C₂₀)-Aryl, Fluor, Chlor, Cyano, Formyl, Acyl oder Alkoxycarbonyl;
substituierte -(C₆-C₂₀)-Arylgruppen und -(C₆-C₂₀)-Aryl-(C₆-C₂₀)-Arylgruppen können, in Abhängigkeit von der Ringgröße, einen oder mehrere Substituenten aufweisen; diese Substituenten sind unabhängig voneinander ausgewählt unter -H, -(C₁-C₁₂)-Alkyl, -O-(C₁-C₁₂)-Alkyl, -O-(C₆-C₂₀)-Aryl, -(C₆-C₂₀)-Aryl, -Halogen, -COO-(C₁-C₁₂)-Alkyl, -CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl, -COOH, -OH, -SO₃H; - SO₃Na, -NO₂, -CN, -N[(C₁-C₁₂)-Alkyl]₂,
wobei die beiden Reste mindestens eines der vier folgenden Restepaare nicht für den gleichen Rest stehen: R¹³ und R²⁰, R¹⁴ und R¹⁹, R¹⁵ und R¹⁸, R¹⁶ und R¹⁷.

Durch das Merkmal, dass "die beiden Reste mindestens eines der vier folgenden Restepaare nicht für den gleichen Rest stehen: R¹³ und R²⁰, R¹⁴ und R¹⁹, R¹⁵ und R¹⁸, R¹⁶ und R¹⁷ " wird zum Ausdruck gebracht, dass es sich um ein unsymmetrisches Biphenol handelt. Bei unsymmetrischen Biphenolen lassen sich die beiden Aromaten nicht durch eine zwischen ihnen liegende Spiegelebene aufeinander abbilden.

Zugelassen sind folgende Restepaarungen, wie beispielsweise:
R¹³ ungleich R²⁰, R¹⁴ gleich R¹⁹, R¹⁵ gleich R¹⁸, R¹⁶ gleich R¹⁷;
R¹³ gleich R²⁰, R¹⁴ gleich R¹⁹, R¹⁵ ungleich R¹⁸, R¹⁶ gleich R¹⁷.

Ober aber auch Restepaarungen bei denen mehr als nur ein Paar ungleich ist, wie beispielsweise:
R¹³ ungleich R²⁰, R¹⁴ gleich R¹⁹, R¹⁵ ungleich R¹⁸, R¹⁶ gleich R¹⁷;
R¹³ ungleich R²⁰, R¹⁴ ungleich R¹⁹, R¹⁵ ungleich R¹⁸, R¹⁶ gleich R¹⁷.

Ausgeschlossen wird lediglich der Fall, bei dem alle vier Restepaare jeweils paarweise für den gleichen Rest stehen:
R¹³ gleich R²⁰, R¹⁴ gleich R¹⁹, R¹⁵ gleich R¹⁸, R¹⁶ gleich R¹⁷.
Hierbei würde es sich um ein symmetrisches Biphenol handeln.

In einer Variante des Verfahrens sind R¹³, R¹⁴, R¹⁵, R¹⁶, R¹⁷, R¹⁸, R¹⁹, R²⁰ ausgewählt aus: -H, -(C₁-C₁₂)-Alkyl, -O-(C₁-C₁₂)-Alkyl, -O-(C₆-C₂₀)-Aryl.

In einer Variante des Verfahrens sind R¹³, R¹⁴, R¹⁵, R¹⁶, R¹⁷, R¹⁸, R¹⁹, R²⁰ ausgewählt aus: -H, -(C₁-C₁₂)-Alkyl, -O-(C₁-C₁₂)-Alkyl.

In einer Variante des Verfahrens sind R¹³, R¹⁴, R¹⁵, R¹⁶, R¹⁷, R¹⁸, R¹⁹, R²⁰ ausgewählt aus: -(C₁-C₁₂)-Alkyl, -O-(C₁-C₁₂)-Alkyl.

In einer Variante des Verfahrens erfolgt die Umsetzung im Verfahrensschritt b) unter Zusatz einer Base.

In einer Variante des Verfahrens erfolgt die Umsetzung im Verfahrensschritt b) unter Zusatz einer Base, welche ausgewählt ist aus: Aminen und Pyridinderivaten.

Vorzugsweise ist die Base ausgewählt aus: Triethylamin, Dimethylaminobutan, Di-isopropylethylamin, Dimethylaminopyridin, N-Methylpyrrolidon, Pyridin.

Besonders bevorzugt ist die Base ausgewählt aus: Triethylamin, Dimethylaminopyridin, Pyridin.

In einer Variante des Verfahrens wird das Edukt (**E3**) vorgelegt, und das PCl₃ hinzugetropft.

In einer Variante des Verfahrens wird das Edukt (**E3**) vor dem Hinzutropfen von PCl₃ auf eine Temperatur im Bereich von -5 °C bis 5 °C heruntergekühlt.

Im Folgenden wird die Erfindung anhand von Ausführungsbeispielen näher erläutert.

### Allgemeine Arbeitsvorschriften

Alle nachfolgenden Präparationen wurden mit Standard-Schlenk-Technik unter Schutzgas durchgeführt. Die Lösungsmittel wurden vor Gebrauch über geeigneten Trocknungsmitteln getrocknet (Purification of Laboratory Chemicals, W. L. F. Armarego (Autor), Christina Chai (Autor), Butterworth Heinemann (Elsevier), 6. Auflage, Oxford 2009).

Phosphortrichlorid (Aldrich) wurde vor dem Einsatz unter Argon destilliert. Alle präparativen Arbeiten erfolgten in ausgeheizten Gefäßen. Die Charakterisierung der Produkte erfolgte mittels NMR-Spektroskopie. Chemische Verschiebungen (δ) werden in ppm angegeben. Die Referenzierung der ³¹P-NMR-Signale erfolgte gemäß: SR³¹P = SR¹H ^{∗} (BF³¹P / BF¹H) = SR¹H ^{∗} 0,4048. (Robin K. Harris, Edwin D. Becker, Sonia M. Cabral de Menezes, Robin Goodfellow, and Pierre Granger, Pure Appl. Chem., 2001, 73, 1795-1818; Robin K. Harris, Edwin D. Becker, Sonia M. Cabral de Menezes, Pierre Granger, Roy E. Hoffman and Kurt W. Zilm, Pure Appl. Chem., 2008, 80, 59-84).

### Synthese des Chlorophosphits

### 6,6'-((4'-(tert-Butyl)-3-methoxy-5-methy)-[1,1'-biphenyl]-2,2'-diyl)bis(oxy))bis(9-(tert-butyl)-4-methoxy-2-methyldibenzo[d,f][1,3,2]dioxaphosphepin)

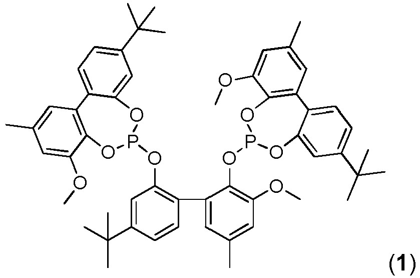

### Variante 1 (nichterfindungsgemäße, zweistufige Synthese):

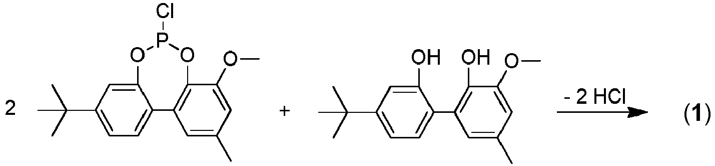

### 9-(tert-Butyl)-6-chloro-4-methoxy-2-methyldibenzo[d,f][1,3,2]dioxaphosphepin

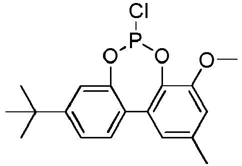

Zu einer auf 0 °C gekühlten Lösung von 4'-(tert-Butyl)-3-methoxy-5-methyl-[1,1'-biphenyl]-2,2'-diol (2,405 g; 8,398 mmol) in einer Mischung aus THF (25 ml) und Pyridin (2 ml) wird unter Rühren eine Lösung von Phosphortrichlorid (1,153 g; 8,398 mmol) in THF (10 ml) getropft. Das Reaktionsgemisch wird zunächst über Nacht bei Raumtemperatur und dann 30 h bei 70 °C gerührt. Es wird filtriert und das Filtrat im Vakuum zur Trockne eingeengt.
Ausbeute: 2,554 g (7,281 mmol; 87%).
³¹P-NMR (CD₂Cl₂): 178,1 ppm.

Das Produkt wurde wie erhalten in der folgenden Synthese eingesetzt.

### Synthese von (1)

Eine Lösung von 4'-(*tert*-Butyl)-3-methoxy-5-methyl-[1,1'-biphenyl]-2,2'-diol (0,274 g; 0,957 mmol) in THF (10 ml) wurde mit einer Lösung von zwei Äquivalenten n-Butyllithium in Hexan (3,59 ml) bei -20 °C versetzt, die erhaltene Mischung noch 20 min bei dieser Temperatur gerührt und dann eine Lösung von 9-(*tert*-Butyl)-6-chloro-4-methoxy-2-methyldibenzo[*d,f*][1,3,2]dioxaphosphepin (0,792 g; 2,258 mmol) in THF (11 ml) bei Raumtemperatur zugegeben. Die Reaktionsmischung wurde über Nacht gerührt und das Lösungsmittel im Vakuum abgezogen. Toluol (25 ml) wurde zugegeben und die resultierende Suspension filtriert. Das Filtrat wurde nochmals über Kieselgel filtriert und das Lösungsmittel im Vakuum entfernt. Der erhaltene Feststoff wurde für 3 h bei 50°C / 0,1 mbar getrocknet. Ausbeute: 0,856 g (0,936 mmol; 98 %) als Gemisch von zwei Diastereomeren. Elementaranalyse (berechnet für C₅₄H₆₀O₉P₂ = 915,01 g/ mol) C 70,67 (70,88); H 6,52 (6,61); P 6,69 (6,77) %.
³¹P-NMR (CD₂Cl₂): 141,9 (d, *J*_{PP}= 7.8 Hz); 142,2 (d, *J*_{PP}= 7.8 Hz); 145,1 (d, *J*_{PP}= 7.8 Hz); 145,2 (d, *J*_{PP}= 7.8 Hz) ppm.
¹H-NMR (CD₂Cl₂): 1,22-1,33 (dd, 18 H); 1,37 (m, 9 H); 2,42 (m, 9 H); 3,81-3,88 (dd, 6 H); 4,02 (s, 3 H); 6,79-6,85 (m, 3 H, Hₐᵣₒₘ); 6,88 (m, 2 H, Hₐᵣₒₘ); 6,90-6,98 (m, 1 H, Hₐᵣₒₘ); 6,95 (m, 1 H, Hₐᵣₒₘ); 7,00-7,05 (m, 1 H, Hₐᵣₒₘ); 7,20-7,35 (m, 4 H, Hₐᵣₒₘ); 7,37-7,44 (m, 3 H, Hₐᵣₒₘ) ppm.
¹³C-NMR (wegen starker Überlappungen im aromatischen Bereich werden nur die Werte für aliphatische Kohlenstoffatome in CD₂Cl₂ als Lösungsmittel angegeben) 21,4; 21,6; 31,3; 31,4; 31,5; 34,9; 34,9; 35,0; 56,4; 56,5; 56,8; 56,8 ppm.
ESI-TOF/HRMS: m/e 915,37826 (M+H)⁺.

### Variante 2 (erfingunggemäße Eintopfsynthese):

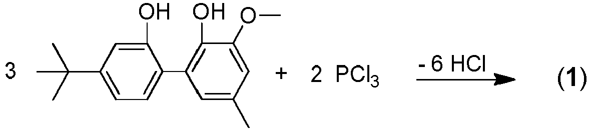

Zu einer auf 0 °C gekühlten Lösung von 4'-(tert-Butyl)-3-methoxy-5-methyl-[1,1'-biphenyl]-2,2'-diol (1,0 g; 3,492 mmol) in einer Mischung aus Toluol (25 ml) und Triethylamin (1,5 ml) wird unter Rühren eine Lösung von Phosphortrichlorid (0,320 g; 2,326 mmol) in Toluol (20 ml) getropft. Nach Zugabe von weiterem Toluol (5 ml) wird das Reaktionsgemisch über Nacht bei Raumtemperatur gerührt. Es wird filtriert und das Filtrat im Vakuum zur Trockne eingeengt. Ausbeute: 1,06 g (99%). ³¹P-NMR (CD₂Cl₂): 141,9 (d, *J*_{PP}= 7.8 Hz); 142,2 (d, *J*_{PP}= 7.8 Hz); 145,1 (d, *J*_{PP}= 7.8 Hz); 145,2 (d, *J*_{PP}= 7.8 Hz) ppm, für die Hauptkomponente, welche 65% der Signalintensität im ³¹P-NMR-Spektrum (D₁= 5 sec.) hält.

Mit dem erfindungsgemäßen Verfahren lassen sich Diphosphite in einem einzigen Reaktionsschritt mit sehr guter Ausbeute herstellen.

## Patentansprüche

1. Verfahren umfassend den Verfahrensschritt:
b) 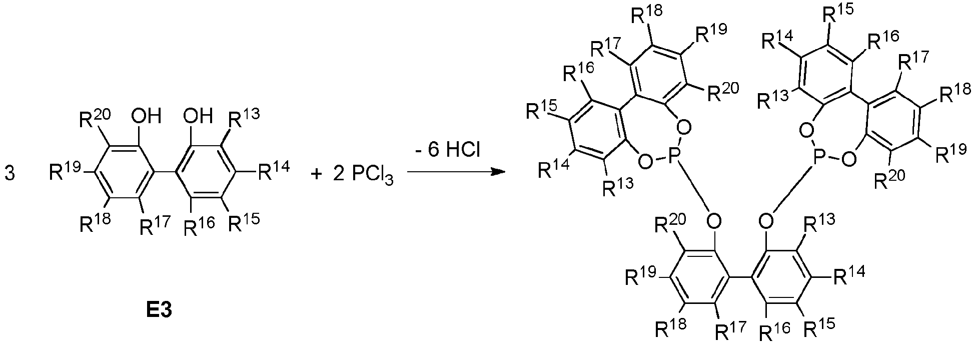 wobei die bei der Umsetzung anfallende Zwischenstufe (**Z3**) nicht isoliert wird: 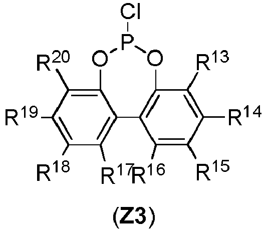 wobei
R¹³, R¹⁴, R¹⁵, R¹⁶, R¹⁷, R¹⁸, R¹⁹, R²⁰ ausgewählt sind aus:
-H, -(C₁-C₁₂)-Alkyl, -O-(C₁-C₁₂)-Alkyl, -O-(C₆-C₂₀)-Aryl, -(C₆-C₂₀)-Aryl, -S-Alkyl, -S-Aryl, Halogen, -COO-(C₁-C₁₂)-Alkyl, -CONH-(C₁-C₁₂)-Alkyl, -CO-(C₁-C₁₂)-Alkyl, -CO-(C₆-C₂₀)-Aryl, -COOH, -OH, -SO₃H, -CN, -N[(C₁-C₁₂)-Alkyl]₂;
wobei die genannten Alkyl- und Arylgruppen wie folgt substituiert sein können:
substituierte -(C₁-C₁₂)-Alkylgruppen und substituierte -(C₁-C₁₂)-Alkoxygruppen können in Abhängigkeit von ihrer Kettenlänge, einen oder mehrere Substituenten aufweisen; die Substituenten sind unabhängig voneinander ausgewählt unter -(C₃-C₁₂)-Cycloalkyl, -(C₃-C₁₂)-Heterocycloalkyl, -(C₆-C₂₀)-Aryl, Fluor, Chlor, Cyano, Formyl, Acyl oder Alkoxycarbonyl; substituierte -(C₆-C₂₀)-Arylgruppen und -(C₆-C₂₀)-Aryl-(C₆-C₂₀)-Arylgruppen können, in Abhängigkeit von der Ringgröße, einen oder mehrere Substituenten aufweisen; diese Substituenten sind unabhängig voneinander ausgewählt unter -H, -(C₁-C₁₂)-Alkyl, -O-(C₁-C₁₂)-Alkyl, -O-(C₆-C₂₀)-Aryl, -(C₆-C₂₀)-Aryl, -Halogen, -COO-(C₁-C₁₂)-Alkyl, -CONH-(C₁-C₁₂)-Alkyl, -(C₆-C₂₀)-Aryl-CON[(C₁-C₁₂)-Alkyl]₂, -CO-(C₁-C₁₂)-Alkyl, -CO-(C₆-C₂₀)-Aryl, -COOH, -OH, -SO₃H;-SO₃Na, -NO₂, -CN, -N[(C₁-C₁₂)-Alkyl]₂,
wobei die beiden Reste mindestens eines der vier folgenden Restepaare nicht für den gleichen Rest stehen: R¹³ und R²⁰, R¹⁴ und R¹⁹, R¹⁵ und R¹⁸, R¹⁶ und R¹⁷.

2. Verfahren nach Anspruch 1,
wobei R¹³, R¹⁴, R¹⁵, R¹⁶, R¹⁷, R¹⁸, R¹⁹, R²⁰ ausgewählt sind aus:
-H, -(C₁-C₁₂)-Alkyl, -O-(C₁-C₁₂)-Alkyl, -O-(C₆-C₂₀)-Aryl, -S-Alkyl, -S-Aryl, Halogen.

3. Verfahren nach einem der Ansprüche 1 oder 2,
wobei R¹³, R¹⁴, R¹⁵, R¹⁶, R¹⁷, R¹⁸, R¹⁹, R²⁰ ausgewählt sind aus:
-H, -(C₁-C₁₂)-Alkyl, -O-(C₁-C₁₂)-Alkyl, -O-(C₆-C₂₀)-Aryl.

4. Verfahren nach einem der Ansprüche 1 bis 3,
wobei die Umsetzung im Verfahrensschritt b) unter Zusatz einer Base erfolgt.

5. Verfahren nach einem der Ansprüche 1 bis 4,
wobei das Edukt (**E3**) vorgelegt wird, und das PCl₃ hinzugetropft wird.

6. Verfahren nach Anspruch 5,
wobei das Edukt (**E3**) vor dem Hinzutropfen von PCl₃ auf eine Temperatur im Bereich von -5 °C bis 5 °C heruntergekühlt wird.

## Claims

1. Method comprising the method step of:
b) 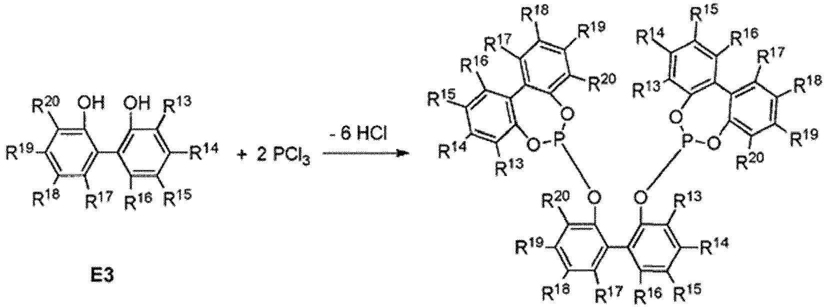 wherein the intermediate (Z3) obtained in the reaction is not isolated: 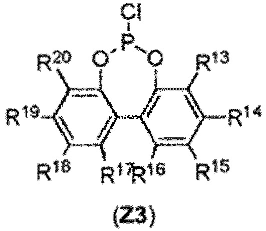 wherein
R¹³, R¹⁴, R¹⁵, R¹⁶, R¹⁷, R¹⁸, R¹⁹, R²⁰ are selected from: -H, -(C₁-C₁₂)-alkyl, -O-(C₁-C₁₂)-alkyl, -O-(C₆-C₂₀)-aryl, -(C₆-C₂₀)-aryl, -S-alkyl, -S-aryl, halogen, -COO-(C₁-C₁₂)-alkyl, -CONH- (C₁-C₁₂)-alkyl, -CO-(C₁-C₁₂)-alkyl, -CO-(C₆-C₂₀)-aryl, -COOH, -OH, -SO₃H, -CN, -N[(C₁-C₁₂)-alkyl]₂;
wherein the alkyl and aryl groups specified may be substituted as follows:
substituted -(C₁-C₁₂)-alkyl groups and substituted-(C₁-C₁₂)-alkoxy groups, depending on their chain length, may comprise one or more substituents; the substituents are each independently selected from -(C₃-C₁₂)-cycloalkyl, -(C₃-C₁₂)-heterocycloalkyl, -(C₆-C₂₀)-aryl, fluorine, chlorine, cyano, formyl, acyl or alkoxycarbonyl; substituted -(C₆-C₂₀)-aryl groups and -(C₆-C₂₀)-aryl-(C₆-C₂₀)-aryl groups, depending on their ring size, may comprise one or more substituents; these substituents are each independently selected from -H, -(C₁-C₁₂)-alkyl, -O-(C₁-C₁₂)-alkyl, -O-(C₆-C₂₀)-aryl, -(C₆-C₂₀)-aryl, -halogen, -COO-(C₁-C₁₂)-alkyl, -CONH-(C₁-C₁₂)-alkyl, -(C₆-C₂₀)-aryl-CON[(C₁-C₁₂)-alkyl]₂, -CO-(C₁-C₁₂)-alkyl, -CO-(C₆-C₂₀)-aryl,-COOH, -OH, -SO₃H, -SO₃Na, NO₂, -CN, -N[(C₁-C₁₂)-alkyl]₂;
wherein both radicals of at least one of the four following radical pairs are not the same radical: R¹³ and R²⁰, R¹⁴ and R¹⁹, R¹⁵ and R¹⁸, R¹⁶ and R¹⁷.

2. Method according to Claim 1,
wherein R¹³, R¹⁴, R¹⁵, R¹⁶, R¹⁷, R¹⁸, R¹⁹, R²⁰ are selected from:
-H, -(C₁-C₁₂)-alkyl, -O-(C₁-C₁₂)-alkyl, -O-(C₆-C₂₀)-aryl, -S-alkyl, -S-aryl, halogen.

3. Method according to either of Claims 1 or 2,
wherein R¹³, R¹⁴, R¹⁵, R¹⁶, R¹⁷, R¹⁸, R¹⁹, R²⁰ are selected from:
-H, -(C₁-C₁₂)-alkyl, -O-(C₁-C₁₂)-alkyl, -O-(C₆-C₂₀)-aryl.

4. Method according to any of Claims 1 to 3,
wherein the reaction in method step b) takes place with addition of a base.

5. Method according to any of Claims 1 to 4,
wherein the reactant (**E3**) is initially charged and PCl₃ is added dropwise.

6. Method according to Claim 5,
wherein the reactant (**E3**) is cooled down to a temperature in the range of -5°C to 5°C prior to the dropwise addition of PCl₃.

## Revendications

1. Procédé comprenant l'étape de procédé suivante :
b) 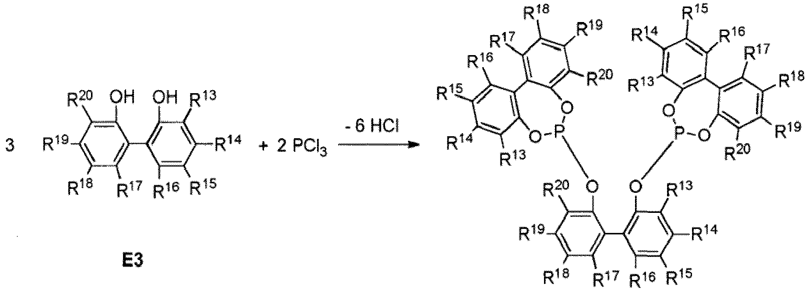 l'intermédiaire (**Z3**) formé lors de la réaction n'étant pas isolé : 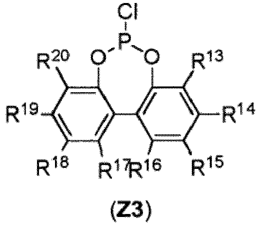 R¹³, R¹⁴, R¹⁵, R¹⁶, R¹⁷, R¹⁸, R¹⁹, R²⁰ étant choisis parmi : H, alkyle en (C₁-C₁₂), -O-alkyle en (C₁-C₁₂), -O-aryle en (C₆-C₂₀), aryle en (C₆-C₂₀), -S-alkyle, -S-aryle, halogène, -COO-alkyle en (C₁-C₁₂), -CONH-alkyle en (C₁-C₁₂), -CO-alkyle en (C₁-C₁₂), -CO-aryle en (C₆-C₂₀), -COOH, -OH,-SO₃H, -CN, -N[alkyle en (C₁-C₁₂)]₂ ;
les groupes alkyle et aryle mentionnés pouvant être substitués de la manière suivante :
les groupes alkyle en (C₁-C₁₂) substitués et les groupes alcoxy en (C₁-C₁₂) substitués peuvent comprendre, en fonction de leur longueur de chaîne, un ou plusieurs substituants ; les substituants étant choisis indépendamment les uns des autres parmi cycloalkyle en (C₃-C₁₂), hétérocycloalkyle en (C₃-C₁₂), aryle en (C₆-C₂₀), fluor, chlore, cyano, formyle, acyle ou alcoxycarbonyle ; les groupes aryle en (C₆-C₂₀) et les groupes aryle en (C₆-C₂₀) -aryle en (C₆-C₂₀) substitués peuvent comprendre, en fonction de leur taille de cycle, un ou plusieurs substituants ; ces substituants étant choisis indépendamment les uns des autres parmi H, alkyle en (C₁-C₁₂), -O-alkyle en (C₁-C₁₂), -O-aryle en (C₆-C₂₀), aryle en (C₆-C₂₀), halogène, -COO-alkyle en (C₁-C₁₂), -CONH-alkyle en (C₁-C₁₂), aryle en (C₆-C₂₀)-CON[alkyle en (C₁-C₁₂)]₂,-CO-alkyle en (C₁-C₁₂), -CO-aryle en (C₆-C₂₀), -COOH, -OH, -SO₃H ; -SO₃Na, -NO₂, -CN, -N[alkyle en (C₁-C₁₂)]₂,
les deux radicaux d'au moins une des quatre paires de radicaux suivantes ne représentant pas le même radical : R¹³ et R²⁰, R¹⁴ et R¹⁹, R¹⁵ et R¹⁸, R¹⁶ et R¹⁷.

2. Procédé selon la revendication 1, dans lequel R¹³, R¹⁴, R¹⁵, R¹⁶, R¹⁷, R¹⁸, R¹⁹, R²⁰ sont choisis parmi :
H, alkyle en (C₁-C₁₂), -O-alkyle en (C₁-C₁₂), -O-aryle en (C₆-C₂₀), -S-alkyle, -S-aryle, halogène.

3. Procédé selon l'une quelconque des revendications 1 ou 2, dans lequel R¹³, R¹⁴, R¹⁵, R¹⁶, R¹⁷, R¹⁸, R¹⁹, R²⁰ sont choisis parmi :
H, alkyle en (C₁-C₁₂), -O-alkyle en (C₁-C₁₂), -O-aryle en (C₆-C₂₀).

4. Procédé selon l'une quelconque des revendications 1 à 3, dans lequel la réaction à l'étape de procédé b) a lieu avec ajout d'une base.

5. Procédé selon l'une quelconque des revendications 1 à 4, dans lequel le réactif (**E3**) est chargé initialement et le PCl₃ est ajouté goutte à goutte.

6. Procédé selon la revendication 5, dans lequel le réactif (**E3**) est refroidi à une température dans la plage allant de -5 °C à 5 °C avant l'ajout goutte à goutte de PCl₃.
